# EUROPEAN PATENT APPLICATION

(11) **EP 2 037 376 A1**
(43) Date of publication of application: **18.03.2009**
(21) Application number: 07018098.9
(22) Date of filing: 14.09.2007
(51) Int. Cl.: G06F 17/30

(54) **Computer-implemented database system**

(71) Applicant: UBS AG, 8001 Zürich (CH)
(72) Inventor: Schmid, Tobias, 5078 Effingen (CH)
(74) Representative: Schmidt, Steffen J.

(57) **Abstract**

A computer-implemented system is provided in a network comprised of several node computers and a plurality of program components, having access to a highly available, persistent data base system to effect reading, writing and/ or mutating accesses to one or more data bases, said one or more data bases having a minimum access time. Separate and distinct from said data base system, a data space system is provided which is organized as one or more data space system segments. This data space system has a minimum access time which is lower than the minimum access time of said data base system. Further, a computer software program module is provided which is programmed and suited to providing, upon a call to obtain a certain information record from said data base system by an application software program, the following functionality: sending a retrieving demand for said demanded information record to said data space system, and if said demanded information record can be retrieved from said data space system, then pasting said demanded information record out of said data space system, providing said demanded information record to said application software program, and setting a status identifier in a status record to 'successful'. In case said status identifier in said status record is not set to 'successful', retrieving said demanded information record from said data base system, providing said demanded information record to said application software program; and copying said demanded information record to said data space system. An expiration period entry is attached to said information record copied to said data space system.

## Description

### Background

Many organizations base their business on networked computers, in which numerous computer software application programs, which are executed / called by users, access the resources (hardware or software or infrastructure) of a network of computers via middleware, operating systems, and other computer program components. There exist organisation models where practically all of the data relevant for carrying out the business is maintained in one or more of highly available electronic data bases managed by one or more data base engines. Access to such data bases is e.g. effected through SQL calls (Standard Query Language calls). In large entities (public administrations, financial institutions, insurance companies, etc.) this can amount to millions of SQL calls per day to be carried out during the normal operation in the computer data bases of that entity. Depending on the implemented architecture of the computer network and the structure of the data repository containing the data bases these SQL calls can cause a significant share of computer processing load. Effecting such SQL calls requires the necessary data processing capacities (i.e. CPU time) which are then not available for other tasks.

### Problem

It is an ever-present requirement to maintain low response times of data bases and to optimally employ the required resources (hardware or software or infrastructure) of the computer network.

### Solution

To contribute to the solution of this problem, a computer-implemented system is provided in a network comprised of several node computers and a plurality of program components, having access to a highly available, persistent data base system to effect reading, writing and/or mutating accesses to one or more data bases, said one or more data bases having a minimum access time. Separate and distinct from said data base system, a data space system is provided which is organized as one or more data space system segments. This data space system has a minimum access time which is lower than the minimum access time of said data base system. Further, a computer software program module is provided which is programmed and suited to providing, upon a call to obtain a certain information record from said data base system by an application software program, the following functionality: sending a retrieving demand for said demanded information record to said data space system, and if said demanded information record can be retrieved from said data space system, then pasting said demanded information record out of said data space system, providing said demanded information record to said application software program, and setting a status identifier in a status record to 'successful'. In case said status identifier in said status record is not set to 'successful', retrieving said demanded information record from said data base system, providing said demanded information record to said application software program; and copying said demanded information record to said data space system. An expiration period entry is attached to said information record copied to said data space system.

A persistent data base system is usually hosted on a mainframe or other types of computers like central data centers which provide high availability. High availability can be measured in fully functional uptime or in downtime. If measured in uptime, an uptime of 99.999% is the guaranteed minimum needed. If measured in downtime, 0.001% is the maximum downtime tolerated for such highly available central data centers. To access information in such central data centers via SQL calls is relatively time-consuming and processor capacity intensive. The present concept is in particularly useful and its use is most noticeable when a data space in the data space system is provided for information data that is often-times read but relatively rarely modified. Significant speed gains are achievable by accessing this information data via the computer software program module from the data space system having shared memory instead of reading this information data from a data base system in the central data centers via SQL calls.

Information data particularly suited for being held in / read-out from the afore-described data space system are data records that do not change too often (e.g. one time per day), but is required to be read out a large number of times. Data records like calendar data, time zone data, number of decimal positions of currency conversion rates, reference data, network resource configuration data, or the like, meet this categorization.

The data space system can be maintained using a computer software data space manager program which provides the possibility to maintain and use such data spaces. These data spaces are then used to store heavily used, but very rarely changed data. Significant execution speed gains are achieved by accessing this data kept in shared memory instead of reading from a highly available, persistent data base system.

In an computer network environment offering multiple logical partitions, the computer software data space manager program is executed as a started task on every logical partition. On start-up, the computer software data space manager program can establish a so called cross memory environment to allow other address spaces to effect synchronous cross memory communication. A cross memory environment can be described by tables and linkages that connect a service provider's address space to a user's address space and by tables and linkages that provide the necessary authorization for the service provider. The cross memory environment also encompasses program call numbers used to initiate cross memory communication. The user requests are handled by program call routines within the computer software data space manager address space. The information needed to call these program call routines is provided to the users by programs that allow to share data between two programs running under the same task, or between two or more tasks or address spaces.

For configuring said data space system segments (herein also referred to as clipboards), a configuration program module can be programmed and suited to receive from said application software program a parameter profile comprising the name of said data space system segment, and an expiration period after which an entry expires, and/or a key length for retrieving an information record, and/or a maximum record length of a data space system segment, and/or a maximum number of records to keep in a data space system segment.

The computer software program module can be programmed and be suited to, prior to providing said demanded information record pasted out of said data space system to the application software program, examining said expiration period entry attributed to said data space system segment from which the information record is to be retrieved, and, if said expiration period entry has expired, then not to provide said information record from said data space system segment to said application software program.

The computer software program module can also be programmed and be suited to effect on the data space system one or more of the following requests: create data space segment, and copy data space segment, and activate data space segment, and clear data space segment, and list data space segment(s), and put data to passive data space segment, and get data from data space segment and put data to active data space segment, and search information record in data space segment. The information needed to configure a data space segment is the clipboard name (e.g. max. 8 characters), the time, e.g. in minutes, after which an entry in this clipboard expires, the length of the key (e.g. max. 256 characters), the maximum length of an information data record in a data space segment, (e.g. max. 1'048'576 bytes), and the number of records to keep in a data space segment. The maximum number of records per clipboard is dependent on: the requirements of the application software program, the maximum record length, and the maximum size of a data space. The range for the maximum number of records per clipboard can go from 1 to over one million. These five items (clipboard name, expiration time in minutes after which an entry expires, key length, max. length of a clipboard record, max. number of records to keep in a clipboard) form - amongst others - the header of each data space segment, that is the clipboard header.

The computer software program module can utilise the computer software program data space manager to provide an easier interface to the data space segments for application programs. Main functions of the computer software program module to access the clipboards are copy, paste and refresh. With the copy-function, the application software program can copy some data with an expiration time, identified by a key and a clipboard name, to a non-persistent Storage. With the paste-function, the application software program can paste some data, identified by a key and a clipboard name, from a non-persistent storage. With the refresh-function, the application software program can set all entries within a clipboard have a certain name on all logical partition present in the system to the status invalid.

On a refresh request from a user, the refresh counter, which is another item within the clipboard header, is incremented by one. This value also is stored in the header of every clipboard entry during a copy request. Therefore, these two values can be compared during a paste request. If both values, the one in the clipboard header and the one from the clipboard entry, are identical, no refresh has been carried out since the last copy of this clipboard entry (i.e. the data record). If a refresh has not been carried out, the complete field must be compared.

Prior to using the clipboards, an application program applies for or requests a data space segment. Requested data space segments are initialized at the time the entire system is (re)started. The relevant information of all configured clipboards is held within an extended common service area. The common service area contains pageable and fixed data areas that are addressable by all active virtual storage address spaces. The common service area normally contains data referenced by a number of system address spaces, enabling address spaces to communicate by referencing the same piece of common service area data. The computer software program module uses the computer software program data space manager mainly to create a data space and to put header information into it. The computer software program data space manager returns to the computer software program module an access list entry token. The access list entry token identifies the access list entry that points to the data space just created. The computer software program module therefore can access the data space segment with the access list entry token returned by the computer software program data space manager, rather than accessing it via cross memory communication. This technique is faster because no time-consuming switching of the address space is necessary.

The procedure of using the data space segments can be as follows: An application program tries - prior to actually effecting an SQL call - to paste an information data record with a given key out of a data space segment by using the computer software program. If the computer software program module returns the information data record, the application program can use it. If the computer software program module does not return the information data record, the application program will retrieve the information data record by effecting an SQL call from somewhere else and copies it, before or after using it, to the data space segment where it will be available for the next paste request. Every data space segment has an expiration period. If a record in a data space segment has expired, the computer software program module will not return this record on a paste request even if it were available. If the persistent data source of an information data record changes, the application program can request a refresh of the corresponding data space segment. In systems with several logical partitions, the refresh can either be effected asynchronously or synchronously.

Further details, possible modifications or alternatives, details and improvements become evident in connection with the description of the drawings.

### Brief description of the drawings

Fig. 1a is a schematic illustration of a prior art network architecture including a data base.
Fig. 1b is a schematic illustration of a network architecture including a data base and a data space used for avoiding to access the data base by providing a data space segment from where the information data is retrieved instead.
Fig. 2a is a schematic illustration of a prior art procedure to access a data base.
Fig. 2b is a schematic illustration of an approach avoiding to access a data base by providing a data space segment from where the information data is retrieved instead.
Fig. 3 is a schematic illustration of an overview of cross memory communication.
Fig. 4 is a schematic illustration of a data space structure.

### Detailed description of the drawings

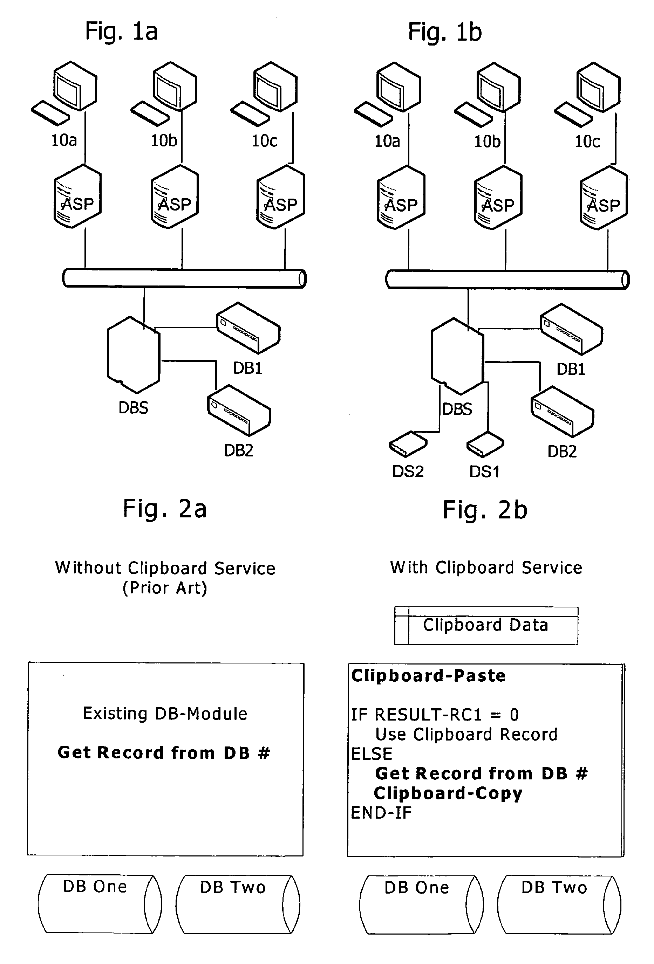

Fig. 1a depicts a network comprised of several node computers 10a, ... 10c and a plurality of application program components hosted on respective servers ASP having access to a highly available, persistent data base system DBS. The application program components can (directly or indirectly) effect accesses to one or more data bases DB1, DB2 hosted / managed by the data base system mainframe DBS through SQL calls, as outlined in the schematic of Fig. 2a. The data bases DB1, DB2 can be organized in a SAN (Storage Area Network), or the like, or otherwise and have a predetermined minimum access time.

Correspondingly, Fig. 1b also depicts a network comprised of several node computers 10a, ... 10c and a plurality of application program components hosted on respective servers ASP having access to a highly available, persistent data base system DBS. The application program components can (directly or indirectly) effect reading, writing and/or mutating accesses to one or more data bases DB1, DB2 hosted / managed by the data base system mainframe DBS through SQL calls, as outlined in the schematic of Fig. 2b. The data bases DB1, DB2 also can be organized in a SAN (Storage Area Network) or the like, and have a predetermined minimum access time. The structural main difference between the system shown in Fig. 1a and the system of Fig. 1b is a data space system DS1, DS2 in Fig. 1b. This data space system DS1, DS2 is separate and distinct from the data bases DB1, DB2 and is organized as one or more data space system segments or Clipboards. The data space system DS1, DS2 has a minimum access time - especially when reading from it - which is lower than the minimum access time of the data bases DB1, DB2.

A computer software program module i.e. Clipboard Service (see Fig. 2b) provides, when initiated by an application software program ASP to obtain a certain information record from the data base system DBS the following functionality:
A retrieving demand for the demanded information record is sent to the data space system DS1, DS2. If the demanded information record can be retrieved from the data space system DS1, DS2, then the demanded information record is pasted out of the data space system DS1, DS2 and provided to the application software program ASP. Additionally, a status identifier in a status record RESULT-RC1 is set to 'successful'. If the status identifier in the status record RESULT-RC1 is not set to 'successful', the demanded information record is retrieved from the data bases DB1, DB2 and provided to the application software program ASP. Additionally, the demanded, retrieved information record is copied to the data space system DS1, DS2. An expiration period entry is attributed to said data space system segments, i.e. the clipboards maintained in the data space system indicating when an information record held therein expires.

Before the clipboard Service can be used by an application, it has to order a clipboard Profile. There are 5 parameters needed to configure a clipboard:

| | |
|---|---|
| - clipboard name | : Name of the clipboard (max. 8 characters) |
| - Expiration | : Time in minutes after which an entry expires |
| - Key length | : Length of the key (max. 256 characters) |
| - Max. Record length | : Maximum length of a clipboard record (max. 1Gigabyte) |
| - Max. num. of records | : Number of records to keep in a clipboard |

To call the Clipboard Service, the copybook CCRCFACD has to be inserted within the working-storage of the calling module. This copybook contains the module name of the Clipboard Service.

All Clipboard Service functions can be called the following way (in COBOL):

| | |
|---|---|
| MOVE clipboardName | TO clipboard-Name |
| SET clipboard-xyz | TO TRUE |
| MOVE ClipRecKey | TO clipboard-Rec-Key |
| MOVE LENGTH OF clipboard-Record | TO clipboard-Rec-Len |
| CALL clipboard | USING SVC-STD |
| | clipboard-API |
| | clipboard-Record |

```
 IF RESULT-RC1 = 0
 * Success
 ELSE
```

```
 * Not Found (if clipboard-Paste)
  END-IF
```

If the Clipboard Service is not initialized or the requested Clipboard-Name is not configured, a non-zero status will be returned in the status-field RESULT-RC1.

The Parameter SVC-STD is passed as the first argument on the Clipboard Service Call. It contains, among others, a RESULT-RC1 status field. This field is checked only in a Clipboard-Paste function to check if a record was returned or not. After all other functions (e.g. Clipboard-Refresh or Clipboard-Copy), the return status does not need to be checked. If a check is necessary, a RESULT-RC2 field explains the reason if RESULT-RC1 is 4.

The Parameter CCRCBAPI is passed as the second argument on the Clipboard Service call. The contents of its individual fields are explained in the following sections.

The Parameter User-Record is passed as the third argument on the functions Clipboard-Copy and Clipboard-Paste. The data within this User-Record will be written to, or read from the Clipboard - depending on the function. This argument can be omitted in a Clipboard-Refresh call.

The following sections describe all the Clipboard Service functions in detail.

With the ClipBoard-Copy function, the record "User-Record" will be copied to the Clipboard named "name", with a key of "key". Its calling sequence can be as follows:

| | |
|---|---|
| MOVE name | TO ClipBoard-Name |
| SET ClipBoard-Copy | TO TRUE |
| MOVE key | TO ClipBoard-Rec-Key |
| MOVE LENGTH OF User-Record | TO ClipBoard-Rec-Len |
| CALL ClipBoard USING | SVC-STD |
| | CCRCBAPI |
| | User-Record |

With the Clipboard-Paste function, the record "User-Record" will be read from the Clipboard named "name", with a key of "key". If the record can not found within the Clipboard, a non-zero status (i.e. not 'successful') will be returned in RESULT-RC1 and the record is to be retrieved from the data bases DB1, DB2 and copied afterwards to the Clipboard. Its calling sequence can be as follows:

| | |
|---|---|
| MOVE name | TO Clipboard-Name |
| SET Clipboard-Paste | TO TRUE |
| MOVE key | TO Clipboard-Rec-Key |
| MOVE LENGTH OF User-Record | TO Clipboard-Rec-Len |
| CALL Clipboard USING | SVC-STD |
| | CCRCBAPI |
| | User-Record |

If the RESULT-RC1 is zero, the requested User-Record with a key of 'key' was retrieved from the Clipboard named 'name'. There are no other checks needed after a Clipboard-Paste call.

With the Clipboard-Refresh function, all Clipboard entries of the Clipboard named 'name' will be invalidated. The refresh is done asynchronously and is done on all logical partitions of a system. Its calling sequence can be as follows:

| | |
|---|---|
| MOVE name | TO ClipBoard-Name |
| SET Clipboard-Refresh | TO TRUE |
| CALL Clipboard USING | SVC-STD |
| | CCRCBAPI |
| | OMITTED |

The function Clipboard-Paste-Size can be used by programs with dynamic buffer allocation. As the size of a Clipboard record can be unknown, the program first can retrieve the size of a Clipboard record, allocate space for the data and thereafter call the function ClipBoard-Paste with the size returned on the call before. Its calling sequence can be as follows:

| | |
|---|---|
| MOVE name | TO Clipboard-Name |
| SET Clipboard-Paste-Size | TO TRUE |
| MOVE key | TO Clipboard-Rec-Key |
| CALL Clipboard | USING SVC-STD |
| | CCRCBAPI |
| | OMITTED |

```
   *
      IF RESULT-RC1 = 0
   *
   * Allocate buffer for the ClipBoard Data
   *
      .
      .
   *
   * Get record from the Clipboard
   *
```

| | |
|---|---|
| SET Clipboard-Paste | TO TRUE |
| CALL Clipboard USING | SVC-STD |
| | CCRCBAPI |
| | allocated_buffer |

```
   *
      ELSE
   *
   * Get and copy record to Clipboard
   *
      END-IF
```

If the RESULT-RC1 is zero, the size of the Clipboard record with a key of 'key' is returned from the Clipboard named 'name' in field Clipboard-Rec-Len. There are no other checks needed after a ClipBoard-Paste-Size call.

Summarizing, the Application Program Interface (API) can be as follows:
01 Clipboard-API.

| | |
|---|---|
| 05 clipboard | PIC X(08). |
| 05 clipboard-Function | PIC S9(08) BINARY. |
| 88 clipboard-Copy | VALUE 1. |
| 88 clipboard-Paste | VALUE 2. |
| 88 clipboard-Refresh | VALUE 3. |
| 88 clipboard-Paste-Size | VALUE 102. |
| 05 clipboard-Rec-Key | PIC X(256). |
| 05 clipboard-Rec-Len | PIC S9(08) BINARY. |

```
 *
 * The copybook CCRCFACD is needed to get the Name to call
 * The clipboard services includes the following:
 *
```

| | |
|---|---|
| 77 clipboard | PIC X(08) VALUE 'CCRCB001'. |

The copybook CCRCFACD is copied to the working-storage of the module which seeks to use the clipboard Service. The copybook CCRCBAPI is used on all calls of the clipboard Service as the second Parameter.

If the RESULT-RC1 field is zero, the function call was successful. There is no need to check the RESULT-RC2 field after calling a clipboard function.

While in Fig. 1b, there are shown two data spaces DS1, DS2, their number can be significantly larger. Also, the number of highly available, persistent data base systems DBS and their data bases DB1, DB2 can be increased.

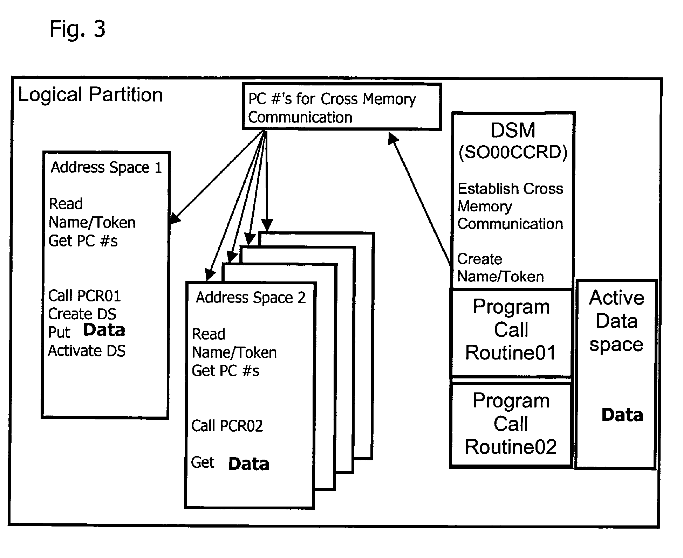

In the data base system DBS, a data space manager provided to establish a cross memory environment (see Fig. 3) to allow other address spaces to effect synchronous cross memory communication. The environment for cross memory communication is defined by tables and linkages that connect a service provider's address space to a user's address space. Additionally, tables and linkages provide the necessary authorization for the service provider. Program call numbers are used in the cross memory environment to initiate the cross memory communication. In order to utilize the clipboards, one or more data space segment are requested and set up. The relevant information of all configured clipboards is held within an extended common service area CSA. This common service area CSA contains data areas that are addressable by all active virtual storage address spaces. The common service area CSA contains data referenced by a number of system address spaces. The data space manager provides an access list entry token. The access list entry token identifies the access list entry that points to a created address / data space of the data space segment. The data space segment is accessed with the access list entry token returned instead of accessing it via cross memory communication.

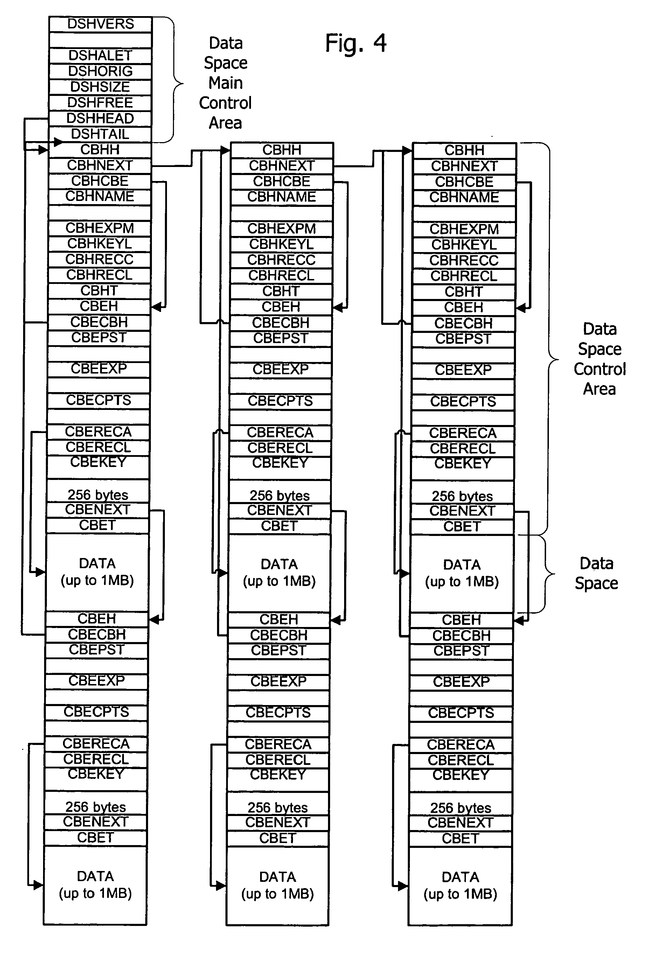

In Fig. 4, a schematic illustration of a data space layout is shown. Evidently, the various information data records are organized as linked records lists. This could be time zone data regarding the time zones around the globe. As an example, in a certain operation period, the data regarding these time zones could have been accessed in the Clipboard under the name GNKTIMEZ as shown below.

| **Key** | **Copy Timestamp** | **Expiry time** | **Paste Count** |
|---|---|---|---|
| 1CET | 2007030209034480 | 0935 | 298,533 |
| 2CET | 2007030120062534 | 0158 | 3,316 |
| 1WET | 2007030215535616 | 1345 | 23 |
| 1AEST | 2007030205375501 | 0729 | 15 |
| 2AEST | 2007030205341438 | 0726 | 9 |
| 2EST1 | 2007030117404020 | 0012 | 1 |
| 2AST | 2007030212013779 | 1113 | 1 |
| 1JST | 2007030205440982 | 0736 | 1 |

In an actual computer network, employing the above-described methodology yielded a rection of more than 600 million SQL calls per day which resulted in a reduction of almost eight hours CPU time per day.

## Claims

1. Computer-implemented system in a network comprised of several node computers and a plurality of program components, having access to
• a highly available, persistent data base system (DBS) to effect reading, writing and/or mutating accesses to one or more data bases (DB1, DB2), said one or more data bases (DB1, DB2) having a minimum access time;
• a data space system (DS1 ... DSm), separate and distinct from said data bases (DB1, DB2), and being organized as one or more data space system segments (Clipboards) and having a minimum access time which is lower than the minimum access time of said data bases (DB1, DB2);
• a computer software program module being programmed and suited to providing, upon a call by an application software program (ASP) to obtain a certain information record from said data bases (DB1, DB2), the functionality of
- sending a retrieving demand for said demanded information record to said data space system (DS1 ... DSm), and
- if said demanded information record can be retrieved from said data space system (DS1 ... DSm), then
■ pasting said demanded information record out of said data space system (DS1 ... DSm);
■ providing said demanded information record to said application software program (ASP); and
■ setting a status identifier in a status record (RESULT-RC1) to 'successful';
- elseif said status identifier in said status record (RESULT-RC1) is not set to 'successful',
■ retrieving said demanded information record from said data bases,
■ providing said demanded information record to said application software program (ASP); and
■ copying said demanded information record to said data space system (DS1 ... DSm), and wherein
• an expiration period entry is attributed to said data space system segments (Clipboards) indicating when an information record held therein expires.

2. Computer-implemented system according to claim 1, wherein
a configuration program module (CPM) is programmed and suited to, for configuring said data space system segments (Clipboards), receive from said application software program (ASP) a parameter profile comprising
○ the name of said data space system segment (Clipboard), and
○ an expiration period after which an entry expires, and/or
○ a key length for retrieving an information record, and/or
○ a maximum record length of a data space system segment (Clipboard), and/or
○ a maximum number of records to keep in a data space system segment (Clipboard).

3. Computer-implemented system according to claim 1 or 2, wherein
a computer software program module data space manager is programmed and suited to establish a cross memory environment to allow other address spaces to effect synchronous cross memory communication, wherein a cross memory environment is defined by tables and linkages that connect a service provider's address space to a user's address space and by tables and linkages that provide the necessary authorization for the service provider, and is defined by program call numbers used to initiate a cross memory communication.

4. Computer-implemented system according to one or more of the preceding claims, wherein
said computer software program module is programmed and suited to, prior to providing said demanded information record pasted out of said data space system (DS1 ... DSm) to the application software program (ASP),
• examining said expiration period entry attributed to said data space system segment(s) from which the information record is to be retrieved from said data space system (DS1 ... DSm), and,
- if said expiration period entry has expired, then
- not to provide said information record from said data space system (DS1 ... DSm) to said application software program (ASP).

5. Computer-implemented system according to one or more of the preceding claims, wherein
said computer software program module (CSPM) is programmed and suited to, effect on the data space system (DS1 ... DSm) one or more of the following requests:
i. create data space segment, and
ii. copy data space segment, and
iii. activate data space segment, and
iv. clear data space segment, and
v. list data space segment(s), and
vi. put data to passive data space segment, and
vii. get data from data space segment, and
viii. put data to active data space segment, and
ix. search information record in data space segment.

6. Method of obtaining a information record from a data base system comprising the following steps:
- sending a retrieving demand for a demanded information record to a data space system,
- if the demanded information record can be retrieved from the data space system, then
- pasting the demanded information record out of the data space system and
- providing it to a application software program, and
- setting a status identifier in a status record to 'successful',
- if the status identifier in the status record is not set to 'successful', then
- retrieving the demanded information record from a data base, and
- providing it to the application software program, and
- copying, the demanded, retrieved information record to the data space system, and
- attributing an expiration period entry to the data space system indicating when an information record held therein expires.

7. Method of obtaining a information record from a data base system according to claim 6, comprising the following steps:
• accessing a highly available, persistent data base system (DBS) in a computer-implemented network system comprised of several node computers and a plurality of program components, by reading, writing and/or mutating accesses to one or more data bases (DB1, DB2), said one or more data bases (DB1, DB2) having a minimum access time;
• providing a data space system (DS1 ... DSm), separate and distinct from said data bases (DB1, DB2), and being organized as one or more data space system segments (Clipboards) and having a minimum access time which is lower than the minimum access time of said data bases (DB1, DB2);
• obtaining, upon a call by an application software program (ASP), a certain information record from said data bases (DB1, DB2), by
- sending a retrieving demand for said demanded information record to said data space system (DS1 ... DSm), and
- if said demanded information record can be retrieved from said data space system (DS1 ... DSm), then
■ pasting said demanded information record out of said data space system (DS1 ... DSm);
■ providing said demanded information record to said application software program (ASP); and
■ setting a status identifier in a status record (RESULT-RC1) to 'successful';
- elseif said status identifier in said status record (RESULT-RC1) is not set to 'successful',
■ retrieving said demanded information record from said data bases,
■ providing said demanded information record to said application software program (ASP); and
■ copying said demanded information record to said data space system (DS1 ... DSm), and wherein
• attributing an expiration period entry to said data space system segments (Clipboards) indicating when an information record held therein expires.

8. Method of obtaining a information record from a data base system according to claim 6 or 7, comprising the following steps:
configuring said data space system segments (Clipboards),
receiving from said application software program (ASP) a parameter profile comprising
o the name of said data space system segment (Clipboard), and
o an expiration period after which an entry expires, and/or
o a key length for retrieving an information record, and/or
o a maximum record length of a data space system segment (Clipboard), and/or
o a maximum number of records to keep in a data space system segment (Clipboard).

9. Method of obtaining a information record from a data base system according to claim 6, 7 or 8, comprising the following steps:
establishing a cross memory environment to allow other address spaces to effect synchronous cross memory communication by tables and linkages that connect a service provider's address space to a user's address space and by tables and linkages that provide the necessary authorization for the service provided, and by program call numbers used to initiate a cross memory communication.

10. Method of obtaining a information record from a data base system according to any of claims 6 to 9, comprising the following steps:
providing said demanded information record pasted out of said data space system (DS1 ... DSm) to the application software program (ASP),
• examining said expiration period entry attributed to said data space system segment(s) from which the information record is to be retrieved from said data space system (DS1 ... DSm), and,
- if said expiration period entry has expired, then
- not to provide said information record from said data space system (DS1 ... DSm) to said application software program (ASP).

11. Method of obtaining a information record from a data base system according to any of claims 6 to 10, comprising the following steps:
effecting on the data space system (DS1 ... DSm) one or more of the following requests:
i. create data space segment, and
ii. copy data space segment, and
iii. activate data space segment, and
iv. clear data space segment, and
v. list data space segment(s), and
vi. put data to passive data space segment, and
vii. get data from data space segment, and
viii. put data to active data space segment, and
search information record in data space segment.

12. A computer program product, which is designed to execute the method according to the preceding claims when executed in a computer or a computer network.
